# EUROPÄISCHE PATENTSCHRIFT

(11) **EP 0 585 667 B1**
(45) Veröffentlichungstag und Bekanntmachung des Hinweises auf die Patenterteilung: **10.04.1996**
(21) Anmeldenummer: 93112792.2
(22) Anmeldetag: 10.08.1993
(51) Int. Cl.: B23H 3/02, B23H 9/02

(54) **Verfahren zur Regelung des Stromes bei einem elektrochemischen Bearbeitungsprozess**
Electric current control method used for electrochemical machining
Méthode de réglage du courant électrique durant un usinage électro-chimique

(30) Priorität: 14.08.1992 DE 4227005
(43) Veröffentlichungstag der Anmeldung: 09.03.1994
(73) Patentinhaber: Frembgen, Fritz-Herbert, D-87700 Memmingen (DE)
(72) Erfinder: Frembgen, Fritz-Herbert, D-87700 Memmingen (DE)
(74) Vertreter: Hübner, Hans-Joachim, Dipl.-Ing.

(56) Entgegenhaltungen:
- EP-A- 0 308 246
- DE-C- 4 040 590

## Beschreibung

Die Erfindung betrifft ein Verfahren zur Regelung des Stromes bei einem elektrochemischen Bearbeitungsprozeß, bei dem zwischen Werkzeug und Werkstück ein, von einem Elektrolyten durchströmter Arbeitsspalt gebildet wird, dessen Breite durch Materialabtrag vergrößert wird, indem vom Werkzeug zum Werkstück ein Gleichstrom fließt, der am Ende des Bearbeitungsprozesses größer als am Anfang ist. Aus der DE 40 40 590 C 1 ist ein derartiges Verfahren bekannt. Bei diesem bekannten Verfahren wird der Materialabtrag in einem Probelauf bestimmt, der z.B. mit konstanter Stromstärke gefahren wird. Das Produkt aus Stromstärke und Bearbeitungszeit ist dem Materialabtrag proportional. In diesem Probelauf wird z.B. der Spannungsanstieg in Abständen oder fortlaufend gemessen, der zu einem Konstantstrom über die ganze Dauer des Arbeitsprozesses führt. Für die anschließenden Arbeitsprozesse wird dann aber nicht diese Konstantstromregelung angewandt, vielmehr wird ausgehend von derselben Anfangsstromstärke die Strommenge pro Zeiteinheit kontinuierlich oder feinstufig über die ganze Dauer des Bearbeitungsprozesses stetig bis auf die Endstromstärke erhöht, die z.B. 10% über der Anfangsstromstärke liegen kann. Diesem bekannten Verfahren lag der Gedanke zugrunde, daß während des Bearbeitungsprozesses sich die Spaltbreite stetig vergrößert, so daß mehr Elektrolyt durch den Spalt fließen und dadurch auch mehr an Wärme abgeführt werden kann. Das bekannte Verfahren hat sich bewährt und führt zu einer Reduzierung der Bearbeitungszeit verglichen mit einer Konstantstromregelung.

Aufgabe der Erfindung ist es, ein Stromregelungsverfahren zu schaffen, mit dem die Bearbeitungszeit weiterhin reduziert werden kann.

Diese Aufgabe wird bei dem Verfahren der eingangs genannten Art dadurch gelöst, daß der Bearbeitungsprozeß mindestens zwei Bearbeitungsperioden umfaßt, zwischen denen ein sprunghafter Stromanstieg erfolgt. Der Gleichstrom kann stetig oder gepulst zugeführt werden, wobei die am Ende des Prozesses vorhandene Stromerhöhung auch durch Vergrößerung der Pulsbreiten erreicht werden kann.

Beim elektrochemischen Bearbeiten und zwar insbesondere beim Entgraten von Werkstücken zeigt sich, daß der abzutragende Grat längs der zu bearbeitenden Kantenlänge häufig ungleichmäßig ist. Es gibt bestimmte lokale Bereiche, in denen der Abstand zwischen Werkstück und Werkzeug kleiner ist als in den übrigen Bereichen. Man kann von sogenannten Gratspitzen sprechen. Da in diesen Bereichen der elektrische Widerstand am kleinsten ist, fließt hier der größte Strom und dieser muß begrenzt werden, um eine örtliche Überhitzung zu vermeiden, die zur Zerstörung des Werkstückes und des Werkzeuges infolge Funkenüberschlages führen könnte. Mit dem erfindungsgemäßen Verfahren wird nun eine erste Bearbeitungsperiode vorgeschlagen, in der die Stromstärke je nach Konfiguration der abzutragenden Gratspitzen, deren Anzahl und Verteilung über die gesamte zu bearbeitende Kantenlänge gerade so niedrig gewählt wird, daß eine Überhitzung des Elektrolyten ausgeschlossen ist. Ein sicherer Wert für den Anfangsstrom ist 0,5 A/mm Gesamtkantenlänge. Die Dauer der ersten Bearbeitungsperiode ist ebenfalls von der Ausbildung der Gratspitzen und deren Häufigkeit abhängig. Im allgemeinen beträgt diese Dauer 10% bis etwa 40% der Gesamtbearbeitungszeit. In vielen Fällen reicht eine erste Bearbeitungsperiode im Bereich von 1 Sek. bis etwa 3 Sek. aus, um die Gratspitzen abzutragen, den Grat also insgesamt zu nivellieren. Danach kann nun erfindungsgemäß der Arbeitsstrom sprunghaft erhöht werden und zwar mindestens um 30%. Die Erfahrung hat aber gezeigt, daß in sehr vielen Anwendungsfällen ein sprunghafter Stromanstieg nach Beseitigung der Gratspitzen auf das Dreifache bis zum Zehnfachen des Anfangsstromes möglich ist, ohne daß es zu einer örtlichen Überhitzung und einer damit einhergehenden Verdampfung des Elektrolyten kommt, weil eben die Engstellen in der ersten Bearbeitungsperiode beseitigt sind, so daß sich ein homogenerer Stromfluß ausbildet. Je nach der Länge des Gesamtbearbeitungsprozesses kann sich an die zweite Bearbeitungsperiode, die auf dem sprunghaft erhöhten Stromniveau gefahren wird, noch eine weitere Stromanstiegsstufe anschließen. In den allermeisten Fällen reicht aber ein zweistufiges Stromregelungsverfahren aus, wobei in der ersten kürzeren Bearbeitungsperiode der Strom konstant oder ansteigend zugeführt wird und dann der sprunghafte Stromanstieg auf die Endstromstärke erfolgt, die dann bis zum Ende des Bearbeitungsprozesses eingehalten wird. Der Erfolg des erfindungsgemäßen Verfahrens ist eine weitere Reduzierung der Bearbeitungszeit. Auch die softwaremäßige Steuerung der Stromzufuhr ist einfacher. In vielen Fällen können Probeläufe mit Spannungsmessungen ganz entfallen. Sie sind nur noch dann sinnvoll, wenn die prozentuale Dauer der ersten Bearbeitungsperiode zu minimieren und die Stromstärke während der ersten Bearbeitungsperiode und/oder der zweiten Bearbeitungsperiode zu maximieren sind.

In den allermeisten Anwendungsfällen führt das erfindungsgemäße Verfahren zum Erfolg, wenn die zeitliche Dauer der ersten Bearbeitungsperiode 1/3 der Gesamtbearbeitungszeit eingestellt wird, die Stromstärke während der ersten Bearbeitungsperiode mit etwa 0,5 A/mm der zu bearbeitenden Kantenlänge vorgegeben wird und der sprunghafte Stromanstieg etwa 300% des konstanten Anfangsstromes beträgt, wobei dieser auf das Dreifache erhöhte Strom während der Dauer der zweiten Bearbeitungsperiode beibehalten wird.

### Beispiel:

Ein Kettenrad mit Graten von 0,7 mm Höhe ist elektrochemisch zu bearbeiten. Die zu bearbeitende Kantenlänge beträgt etwa 200 mm.
a) Wird das Konstantstromregelungsverfahren angewendet, stellt man die Stromstärke auf 100 A ein und es ergibt sich entsprechend der insgesamt abzutragenden Materialmenge eine Entgratzeit von 20 Sekunden. Das Strom- Zeit-Produkt beträgt dann 2000 As (Ampersekunden).
b) Das eingangs beschriebene Stromregelungsverfahren gemäß DE 4040 590 C 1 würde mit einem Anfangsstrom von 100 A beginnen, wonach der Strom kontinuierlich linear auf 110 A erhöht wird, mit dem Erfolg, daß die Entgratzeit 19 Sekunden beträgt. Würde man dagegen den linearen kontinuierlichen Stromanstieg steiler verlaufen lassen mit einer Endstromstärke von 300 A, so würde daraus eine Entgratzeit von 10 Sekunden resultieren.
c) Das erfindungsgemäße Verfahren beginnt mit einer Stromstärke von 100 A, die während der ersten Bearbeitungsperiode beibehalten wird. Die Dauer der ersten Bearbeitungsperiode beträgt 3 Sekunden. Danach erfolgt ein sprunghafter Anstieg auf 300 A und mit dieser dreifachen Stromstärke wird die zweite Bearbeitungsperiode gefahren, die 6 Sekunden dauert. Es ergibt sich also eine Gesamtbearbeitungszeit von 9 Sekunden.

Bei allen drei Stromregelungsverfahren wird zur Entgratung dieselbe Gesamtstrommenge von 2000 As zugeführt. Die Entgratzeit beim erfindungsgemäßen Verfahren gemäß lit. c beträgt nur 45% der beim Konstantstrom-Regelungsverfahren aufzuwendenden Zeit. Gegenüber dem verbesserten Regelungsverfahren nach dem Stand der Technik gemäß lit. b wird - wenn dort die zweite Alternative in Bezug genommen wird - immerhin noch eine Zeitersparnis von 10% erzielt. Bei Großserien ist diese Zeitersparnis markant und sie läßt sich durch Optimierung noch weiter vergrößern, insbesondere, wenn die Gratkonfiguration des Werkstückes dies zuläßt, um z.B. die prozentuale Dauer der ersten Bearbeitungsperiode zu verringern und die zugehörige Anfangsstromstärke zu erhöhen. Von besonderem Einfluß auf die Reduzierung der Gesamtbearbeitungszeit ist die Größe des Endstromes, also des Stromes in der zweiten Bearbeitungsperiode und dieser wird durch die Spaltweite zwischen Werkzeug und Werkstück einerseits und damit von der Menge des durch den Spalt fließenden Elektrolyten genauso bestimmt wie vom Kontaktübergangswiderstand zwischen den Anoden und dem Werkstück sowohl in elektrischer als auch in thermischer Hinsicht. Darüberhinaus begrenzen auch der Querschnitt der Stromzuführungen und die maximale Generatorspannung die Höhe des Endstromes.

Generell läßt sich sagen, daß die prozentuale Dauer der ersten Bearbeitungsperiode in Abhängigkeit von dem Quotienten aus der Summe gratbehafteter bzw. stark zu bearbeitender Kantenstücke am Arbeitsspalt und der zu bearbeitenden Gesamtkantenlänge bestimmt wird. Ist dieser Quotient klein, so kann auch die prozentuale Dauer der ersten Bearbeitungsperiode niedrig gewählt werden. Die Stromstärke zu Beginn der ersten Bearbeitungsperiode liegt vorzugsweise im Bereich von etwa 0,5 A bis etwa 5 A pro mm zu bearbeitender Kantenlänge und hier muß ein Wert im unteren Bereich gewählt werden, wenn der auf die zu bearbeitende Gesamtkantenlänge bezogene Längenanteil stark abzutragender Bereiche klein ist. Andernfalls würde es im Bereich dieser Gratspitzen zu örtlichen Überhitzungen kommen. Liegen dagegen günstigere Verhältnisse vor, insbesondere hinsichtlich einer gleichmäßigen Kante mit allenfalls geringer Grathöhe, so kann mit einem Anfangsstrom im oberen Teil des angegebenen Bereiches gefahren werden, weil sich der Arbeitsstrom im wesentlichen über die ganze Kantenlänge verteilt.

Auch für die Höhe des Faktors des sprunghaften Stromanstieges spielt der Längenanteil stark abzutragender Gratstücke bezogen auf die zu bearbeitende Gesamtkantenlänge eine Rolle, denn wenige lokale Gratspitzen können während der ersten Bearbeitungsperiode so weit nivelliert werden, daß für den Stromanstiegsfaktor im Bereich von etwa 2 bis etwa 10 ein Wert im oberen Bereich gewählt werden kann, jedenfalls dann, wenn die übrigen vorstehend genannten Kriterien hinsichtlich der Begrenzung des Endstromes dies zulassen.

## Patentansprüche

1. Verfahren zur Regelung des Stromes bei einem elektrochemischen Bearbeitungsprozeß, bei dem zwischen Werkzeug und Werkstück ein, von einem Elektrolyten durchströmter Arbeitsspalt gebildet wird, dessen Breite durch Materialabtrag vergrößert wird, indem vom Werkzeug zum Werkstück ein Gleichstrom fließt, dessen Strommenge am Ende des Bearbeitungsprozesses größer als am Anfang ist, **dadurch gekennzeichnet, daß** der Bearbeitungsprozeß mindestens zwei Bearbeitungsperioden umfaßt, zwischen denen ein sprunghafter Strommengenanstieg erfolgt und daß dieser mindestens 30% der am Ende der ersten Bearbeitungsperiode vorhandenen Strommenge ausmacht.

2. Verfahren nach Anspruch 1, **dadurch gekennzeichnet, daß** eine erste Bearbeitungsperiode mit konstanter oder ansteigender Strommenge durchgeführt wird, bevor die Strommenge sprunghaft erhöht wird und daß die Dauer der ersten Bearbeitungsperiode im Bereich von etwa 10% bis etwa 40% der gesamten Bearbeitungszeit liegt.

3. Verfahren nach Anspruch 1 oder 2, **dadurch gekennzeichnet, daß** die Strommenge am Ende des Bearbeitungsprozesses mindestens etwa das Dreifache der Anfangsstrommenge beträgt.

4. Verfahren nach einem der Ansprüche 1 bis 3, **dadurch gekennzeichnet, daß** der sprunghafte Strommengenanstieg einen Wert im Bereich des Zwei-bis Zehnfachen der Anfangsstrommenge ausmacht und einen Wert im oberen Teil des Bereiches gewählt wird, wenn der auf die zu bearbeitende Gesamtkantenlänge bezogene Längenanteil stark abzutragender Bereiche klein ist.

5. Verfahren nach einem der Ansprüche 1 bis 4, **dadurch gekennzeichnet, daß** die Strommenge in der mindestens einen, sich an den sprunghaften Strommengenanstieg anschließenden Bearbeitungsperiode etwa konstant gehalten wird.

6. Verfahren nach einem der Ansprüche 1 bis 5, **dadurch gekennzeichnet, daß** die prozentuale Dauer der ersten Bearbeitungsperiode in Abhängigkeit von dem Quotienten aus der Summe gratbehafteter bzw. stark zu bearbeitender Kantenstücke am Arbeitsspalt und der zu bearbeitenden Gesamtkantenlänge bestimmt wird und bei keinem Quotienten auch die prozentuale Dauer der ersten Bearbeitungsperiode niedrig gewählt wird.

7. Verfahren nach einem der Ansprüche 1 bis 6, **dadurch gekennzeichnet, daß** die Strommenge zu Beginn der ersten Bearbeitungsperiode im Bereich von etwa 0,5A bis etwa 5 A pro mm zu bearbeitender Kantenlänge liegt und daß ein Wert im unteren Teil des Bereiches gewählt wird, wenn der auf die zu bearbeitende Gesamtkantenlänge bezogene Längenanteil stark abzutragender Bereiche klein ist.

## Claims

1. Method of controlling the current in an electrochemical machining process, in which there is formed, between tool and workpiece, a working gap which has an electrolyte flowing through it and whose width is increased by material erosion since a direct current flows from tool to workpiece whose quantity of current is greater at the end of the machining process than at the beginning, characterized in that the machining process comprises at least two machining cycles between which an abrupt increase in the quantity of current takes place and in that the latter constitutes at least 30% of the quantity of current present at the end of the first machining cycle.

2. Method according to Claim 1, characterized in that a first machining cycle is carried out with a constant or increasing quantity of current before the quantity of current is abruptly increased and in that the duration of the first machining cycle is in the range from about 10% to about 40% of the total machining time.

3. Method according to Claim 1, characterized in that the quantity of current at the end of the machining process is about three times the initial quantity of current.

4. Method according to one of Claims 1 to 3, characterized in that the abrupt increase in the quantity of current constitutes a value in the range from two to ten times the initial quantity of current and a value is chosen in the upper part of the range if the proportion of the length of regions to be heavily eroded is small, said proportion being based on the total edge length to be machined.

5. Method according to one of Claims 1 to 4, characterized in that the quantity of current in the at least one machining cycle adjoining the abrupt increase in the quantity of current is kept approximately constant.

6. Method according to one of Claims 1 to 5, characterized in that the percentage duration of the first machining cycle is determined as a function of the quotient of the sum of burred edge sections or edge sections to be heavily machined at the working gap and of the total edge length to be machined and, if the quotient is small, the percentage duration of the first machining cycle is also chosen as small.

7. Method according to one of Claims 1 to 6, characterized in that the quantity of current at the beginning of the first machining cycle is in the range from about 0.5 A to about 5 A per mm of edge length to be machined and in that a value in the lower part of the range is chosen if the proportion of the length of regions to be heavily eroded is small, said proportion being based on the total edge length to be machined.

## Revendications

1. Procédé de réglage du courant électrique pendant une opération d'usinage électrochimique, dans lequel il est créé, entre l'outil et la pièce à usiner, un espace d'usinage, traversé par un électrolyte, dont la largeur est augmentée par enlèvement de matériau en faisant passer, de l'outil vers la pièce à usiner, un courant électrique continu qui est plus intense à la fin de l'opération d'usinage qu'au début, caractérisé en ce que l'opération d'usinage comporte au moins deux périodes d'usinage entre lesquelles a lieu une augmentation en saut de la quantité de courant électrique et que celle-ci représente au moins 30% de la quantité de courant électrique présente à la fin de la première période d'usinage.

2. Procédé suivant la revendication 1, caractérisé en ce qu'une première période d'usinage est réalisée avec une quantité de courant électrique constante ou croissante, avant que la quantité de courant électrique n'est augmentée par saut et que la durée de la première période d'usinage se situe dans la plage de 10% à 40% du temps d'usinage total.

3. Procédé suivant la revendication 1 ou 2, caractérisé en ce que la quantité de courant électrique à la fin de l'opération d'usinage est d'au moins environ trois fois la quantité de courant électrique initiale.

4. Procédé suivant l'une des revendications 1 à 3, caractérisé en ce que l'augmentation par saut de la quantité de courant électrique représente une valeur de l'ordre de deux à dix fois la quantité de courant électrique initiale et qu'il est choisi une valeur dans la partie haute de la plage lorsque la proportion de longueur des zones à éliminer intensivement est faible par rapport à la longueur totale du bord à usiner.

5. Procédé suivant l'une des revendications 1 à 4, caractérisé en ce que la quantité de courant électrique est maintenue environ constante dans l'au moins une période d'usinage suivant l'augmentation par saut de la quantité de courant électrique.

6. Procédé suivant l'une des revendications 1 à 5, caractérisé en ce que la durée proportionnelle de la première période d'usinage est déterminée en fonction du quotient de la somme des pièces de bord à barbes adhérentes ou à usiner intensivement à l'endroit de l'espace d'usinage et de la longueur totale du bord à usiner et qu'en cas de quotient faible, la durée proportionnelle de la première période d'usinage est également choisie réduite.

7. Procédé suivant l'une des revendications 1 à 6, caractérisé en ce que la quantité de courant électrique au début de la première période d'usinage est de l'ordre d'environ 0,5 A à environ 5 A par mm de longueur de bord à usiner et qu'il est choisi une valeur dans la partie inférieure de la plage lorsque la proportion de longueur des zones à éliminer intensivement est faible par rapport à la longueur totale du bord à usiner.
